# FASCICULE DE BREVET EUROPEEN

(11) **EP 2 452 845 B1**
(45) Date de publication et mention de la délivrance du brevet: **05.06.2013**
(21) Numéro de dépôt: 11306498.4
(22) Date de dépôt: 16.11.2011
(51) Int. Cl.: B60K 15/05

(54) **Trappe, notamment pour une pièce de carrosserie de véhicule automobile**
Klappe, insbesondere für ein Karosserieteil eines Kraftfahrzeugs
Flap, in particular for a part of the bodywork of a motor vehicle

(30) Priorité: 16.11.2010 FR 1059395
(43) Date de publication de la demande: 16.05.2012
(73) Titulaire: Faurecia Bloc Avant, 92000 Nanterre (FR)
(72) Inventeur: Lachaux, Thierry, 70200 Frotey-les-Lure (FR); Devlamynck, Vincent, 25310 Blamont (FR)
(74) Mandataire: Blot, Philippe Robert Emile

(56) Documents cités:
- DE-A1-102008 047 464
- FR-A1- 2 920 009
- US-A1- 2007 040 409

## Description

La présente invention concerne une trappe, notamment pour une pièce de carrosserie de véhicule automobile.

Une telle trappe est par exemple destinée à équiper un véhicule automobile électrique, de façon à masquer une prise de recharge de ce véhicule électrique.

Il est possible de prévoir une trappe comportant :
- une partie fixe, comprenant une ouverture,
- une partie mobile par rapport à cette partie fixe, et propre à se déplacer entre une position d'obturation de l'ouverture et une position de dégagement de cette ouverture, et
- un organe élastique, s'étendant entre la partie fixe et la partie mobile de façon à rappeler cette partie mobile dans sa position d'obturation ou dans sa position de dégagement.

L'organe élastique présente généralement une forme générale en S, comprenant une première branche latérale, reliée à la partie fixe, une seconde branche latérale, reliée à la partie mobile, et une branche oblique joignant les première et seconde branches latérales.

Cet organe élastique est agencé de façon à se déformer en compression par rapprochement et éloignement des première et seconde branches latérales au cours de chaque cycle d'ouverture et de fermeture de la trappe. Ainsi, l'organe élastique subit des contraintes lors de chacun de ces cycles, un tel organe élastique en forme de S étant susceptible de résister jusqu'à environ 1500 cycles.

Dans le cas où la trappe masque une prise de recharge d'un véhicule électrique, cette trappe est généralement sollicitée quotidiennement pour permettre la recharge de ce véhicule électrique. Il en résulte que la durée de vie de l'organe élastique est relativement faible.

Une trappe selon le préambule de la revendication 1 est connue du document DE 10 2008 047 464 A1.

L'invention a notamment pour but de remédier à cet inconvénient en fournissant une trappe dont l'organe élastique présente une meilleure durée de vie.

A cet effet, l'invention a pour objet une trappe, notamment pour une pièce de carrosserie de véhicule automobile, selon la revendication 1.

La spire permet de réduire les contraintes subies par l'organe élastique lorsque les première et seconde branches latérales se rapprochent et s'éloignent au cours d'un cycle d'ouverture et de fermeture de la trappe.

De fait de sa forme particulière, un tel organe élastique est susceptible de supporter jusqu'à 10000 cycles d'ouverture et de fermeture de la trappe.

Une trappe selon l'invention peut en outre comporter l'une ou plusieurs des caractéristiques suivantes, prises seules ou selon toutes les combinaisons techniquement possibles :
- les première et seconde branches latérales de l'organe élastique sont sensiblement parallèles,
- l'organe élastique présente une forme générale en M,
- la spire de l'organe élastique présente un diamètre sensiblement égal à l'écartement entre les première et seconde branches centrales de cet organe élastique,
- la trappe comporte un élément de charnière solidaire de la partie mobile, et mobile par rapport à la partie fixe entre une première position, dans laquelle la partie mobile est dans sa position d'obturation, et une seconde position, dans laquelle la partie mobile est dans sa position de dégagement, en passant par une position intermédiaire,
- l'organe élastique est relié à l'élément de charnière, de façon à rappeler cet élément de charnière vers sa première position lorsque cet élément de charnière est positionné entre cette première position et sa position intermédiaire, et de façon à rappeler cet élément de charnière vers sa seconde position lorsque cet élément de charnière est positionné entre cette seconde position et sa position intermédiaire, et
- l'élément de charnière comporte une gorge d'encliquetage de la seconde branche latérale de l'organe élastique dans laquelle est logée cette seconde branche latérale.

L'invention concerne également un élément de carrosserie de véhicule automobile comportant une telle trappe.

L'invention concerne enfin un véhicule automobile comportant un tel élément de carrosserie.

De manière optionnelle, le véhicule automobile présente l'une ou plusieurs des caractéristiques suivantes :
- la trappe masque une ouverture de réservoir d'essence, et
- la trappe masque une prise de recharge du véhicule.

L'invention sera mieux comprise à la lecture de la description qui va suivre, donnée uniquement à titre d'exemple et faite en se référant aux figures annexées parmi lesquelles :
- la Figure 1 est une vue partielle en perspective d'un élément de carrosserie de véhicule automobile comportant une trappe selon un exemple de mode de réalisation de l'invention ;
- la Figure 2 est une vue en perspective d'un organe élastique équipant la trappe de la Figure 1.

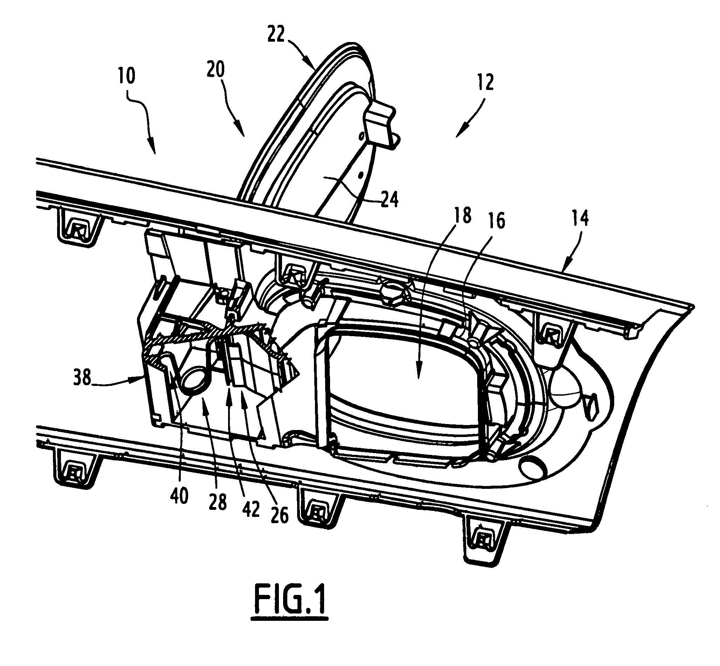

On a représenté sur la Figure 1 un élément de carrosserie 10 de véhicule automobile, comportant une trappe 12. Un tel élément de carrosserie est par exemple destiné à être agencé à l'avant d'un véhicule automobile électrique, sur une calandre de ce véhicule, de sorte que la trappe 12 masque une prise de recharge du véhicule.

En variante, on pourrait prévoir un élément de carrosserie destiné à être agencé sur une partie latérale arrière d'un véhicule automobile, comportant une trappe similaire destinée à masquer une ouverture de réservoir d'essence.

La trappe 12 comporte une partie fixe 14, fixée sur l'élément de carrosserie 10 ou venue de matière avec cet élément de carrosserie 10.

Cette partie fixe 14 comporte un cadre 16 délimitant une ouverture 18 à travers de laquelle il est possible d'accéder à la prise de recharge du véhicule automobile électrique.

La trappe 12 comporte également une partie mobile 20 propre à se déplacer par rapport à la partie fixe 14 entre une position d'obturation de l'ouverture 18 (non représentée) et une position de dégagement de cette ouverture 18 (représentée sur la Figure 1).

La partie mobile 20 comporte une partie décorative 22, également appelée enjoliveur, destinée à être visible depuis l'extérieur du véhicule automobile, notamment lorsque la partie mobile 20 est dans sa position d'obturation. La partie mobile 20 comporte également une partie structurelle 24 comprenant notamment un élément de charnière classique 26, également appelée charnon.

L'élément de charnière 26 est mobile par rapport à la partie fixe 14, entre une première position, dans laquelle la partie mobile est dans sa position d'obturation, et une seconde position, dans laquelle la partie mobile 20 est dans sa position de dégagement, en passant par une position intermédiaire.

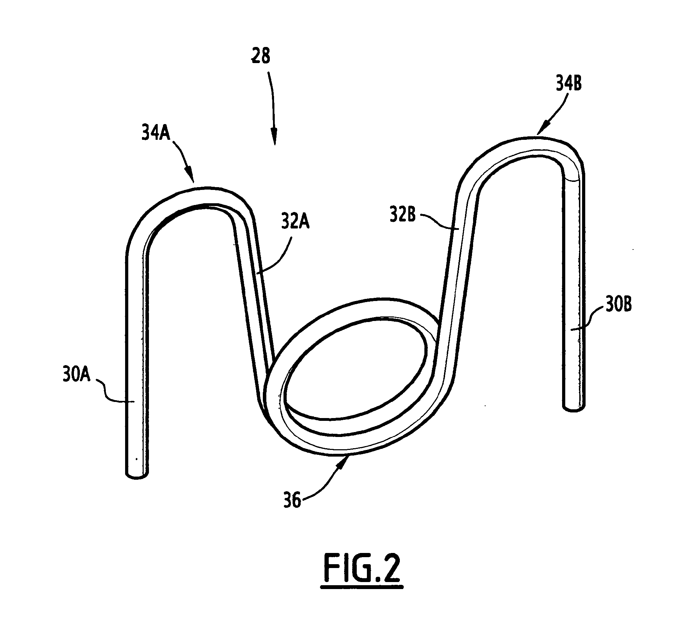

La trappe 12 comporte également un organe élastique 28, s'étendant entre la partie fixe 14 et la partie mobile 20, de façon à rappeler la partie mobile 20 dans sa position d'obturation ou dans sa position de dégagement. Cet organe élastique 28 est notamment représenté sur la Figure 2.

L'organe élastique 28 présente une forme générale en M, et comporte une première branche latérale 30A, reliée à la partie fixe 14, et une seconde branche latérale 30B, reliée à la partie mobile 20, notamment à l'élément de charnière 26.

L'organe élastique 28 comporte également une première branche centrale 32A, prolongeant la première branche latérale 30A en formant un premier pli 34A, et une seconde branche centrale 32B, prolongeant la seconde branche latérale 30B vers l'intérieur du M, en formant un second pli 34B.

L'organe élastique 28 comporte enfin une spire 36 reliant les premières 32A et secondes 32B branches centrales.

De préférence, les premières 30A et secondes 30B branches latérales sont sensiblement parallèles. Par ailleurs, la spire 36 présente un diamètre sensiblement égal à un écartement entre les premières 32A et secondes 32B branches centrales de l'organe élastique 28.

Cet organe élastique 28 est agencé de manière classique dans la trappe 12.

A cet effet, la partie fixe 14 comporte un boitier 38 de logement de l'organe élastique 28, auquel la première branche latérale 30A est fixée, par exemple en étant plaquée dans un angle 40 de ce boitier 38.

Par ailleurs, l'organe élastique est relié à l'élément de charnière 26, par exemple par encliquetage de la seconde branche latérale 30B dans une gorge 42 ménagée sur l'élément de charnière 26.

Conformément au mode de réalisation décrit, l'organe élastique 28 et l'élément de charnière 26 sont agencés de sorte que l'organe élastique 28 rappelle cet élément de charnière 26 vers sa première position lorsque cet élément de charnière 26 est positionné entre cette première position et sa position intermédiaire, et rappelle cet élément de charnière 26 vers sa seconde position lorsque cet élément de charnière 26 est positionné entre cette seconde position et sa position intermédiaire.

En d'autres termes, tant que l'angle d'ouverture de la partie mobile 20 est inférieur à un seuil prédéterminé, cette partie mobile 20 est rappelée vers sa position d'obturation, et lorsque l'angle d'ouverture de la partie mobile 20 est supérieur au seuil prédéterminé, cette partie mobile 20 est rappelée vers sa position de dégagement.

Par exemple, l'élément de charnière 26 est agencé pour contourner une saillie angulaire de la partie fixe 14 lorsqu'il se déplace entre ses premières et secondes positions, cette saillie angulaire correspondant à la position intermédiaire. Ainsi, l'organe élastique 28 repousse sa seconde branche latérale 30B d'un côté ou de l'autre de cette saillie angulaire, entraînant respectivement la partie mobile 20 vers sa position d'obturation ou vers sa position de dégagement.

La trappe 12, munie de l'organe élastique 26 ainsi agencé, est bistable, cet organe élastique 26 étant propre à réaliser à la fois une fonction de rappel élastique de la partie mobile 20 vers sa position d'obturation et une fonction de rappel élastique de cette partie mobile 20 vers sa position de dégagement.

On notera que l'invention n'est pas limitée au mode de réalisation précédemment décrit, mais pourrait présenter diverses variantes sans sortir du cadre des revendications. En particulier, l'organe élastique 28 pourrait être agencé de toute autre manière envisageable dans la trappe 12

## Revendications

1. Trappe (12), notamment pour une pièce de carrosserie (10) de véhicule automobile, du type comportant :
- une partie fixe (14) comprenant une ouverture (18),
- une partie (20) mobile par rapport à la partie fixe (14), et propre à se déplacer entre une position d'obturation de l'ouverture (18) et une position de dégagement de l'ouverture (18), et
- un organe élastique (28), s'étendant entre la partie fixe (14) et la partie mobile (20), de façon à rappeler la partie mobile (20) dans sa position d'obturation ou dans sa position de dégagement,
l'organe élastique (28) comportant :
- une première branche latérale (30A), reliée à la partie fixe (14), et une seconde branche latérale (30B), reliée à la partie mobile (20), et une spire (36),
**caractérisée en ce que** l'organe élastique (28) comporte en outre :
- une première branche centrale (32A), prolongeant la première branche latérale (30A) en formant un premier pli (34A), et une seconde branche centrale (32B), prolongeant la seconde branche latérale (30B) en formant un second pli (34B),
et **en ce que**
- la spire (36) relie les première (32A) et seconde (32B) branches centrales entre elles.

2. Trappe (12) selon la revendication 1, dans laquelle les première (30A) et seconde (30B) branches latérales de l'organe élastique (28) sont sensiblement parallèles.

3. Trappe (12) selon la revendication 1 ou 2, dans laquelle l'organe élastique (28) présente une forme générale en M.

4. Trappe (12) selon l'une quelconque des revendications précédentes, dans laquelle la spire (36) de l'organe élastique (28) présente un diamètre sensiblement égal à l'écartement entre les première (32A) et seconde (32B) branches centrales de cet organe élastique (28).

5. Trappe (12) selon l'une quelconque des revendications précédentes, dans laquelle :
- la trappe (12) comporte un élément de charnière (26) solidaire de la partie mobile (20), et mobile par rapport à la partie fixe (14) entre une première position, dans laquelle la partie mobile (20) est dans sa position d'obturation, et une seconde position, dans laquelle la partie mobile (20) est dans sa position de dégagement, en passant par une position intermédiaire,
- l'organe élastique (28) est relié à l'élément de charnière (26), de façon à rappeler cet élément de charnière (26) vers sa première position lorsque cet élément de chamière (26) est positionné entre cette première position et sa position intermédiaire, et de façon à rappeler cet élément de charnière (26) vers sa seconde position lorsque cet élément de charnière (26) est positionné entre cette seconde position et sa position intermédiaire.

6. Trappe (12) selon la revendication 5, dans laquelle l'élément de charnière (28) comporte une gorge (42) d'encliquetage de la seconde branche latérale (30B) de l'organe élastique (28), dans laquelle est logée cette seconde branche latérale (30B).

7. Elément (10) de carrosserie de véhicule automobile, comportant une trappe (12) selon l'une quelconque des revendications 1 à 6.

8. Véhicule automobile, comportant un élément de carrosserie (10) selon la revendication 7.

9. Véhicule automobile selon la revendication 8, dans lequel la trappe (12) masque une ouverture de réservoir d'essence.

10. Véhicule automobile selon la revendication 8, du type électrique, dans lequel la trappe (12) masque une prise de recharge du véhicule.

## Patentansprüche

1. Klappe (12), insbesondere für ein Karosserieteil (10) eines Kraftfahrzeugs, von einem Typ, welcher aufweist:
einen festen Teil (14), welcher eine Öffnung (18) aufweist,
einen Teil (20), der gegenüber dem festen Teil (14) beweglich ist, und welcher geeignet ist, sich zwischen einer Verschlussposition der Öffnung (18) und einer Freigabeposition der Öffnung (18) zu bewegen, und
ein elastisches Bauteil (28), welches sich zwischen dem festen Teil (14) und dem beweglichen Teil (20) erstreckt, auf eine Art zum Bewegen des beweglichen Teils (20) in seine Verschlussposition oder in seine Freigabeposition.
wobei das elastische Bauteil (28) aufweist:
einen ersten Seitenschenkel (30A), welcher an dem festen Teil (14) angebracht ist, und einen zweiten Seitenschenkel (30B), welcher an dem beweglichen Teil (20) angebracht ist, und eine Windung (36),
**dadurch gekennzeichnet, dass** das elastische Bauteil (28) ferner aufweist:
einen ersten zentralen Schenkel (32A), welcher den ersten Seitenschenkel (30A) unter Ausbildung eines ersten Knicks (34A) fortsetzt, und einen zweiten zentralen Schenkel (32B), welcher den zweiten Seitenschenkel (30B) unter Ausbildung eines zweiten Knicks (34B) fortsetzt,
und wobei
die Windung (36) den ersten (32A) und den zweiten (32B) zentralen Schenkel miteinander verbindet.

2. Klappe (12) gemäß Anspruch 1, wobei der erste (30A) und der zweite (30B) Seitenschenkel des elastischen Bauteils (28) etwa parallel sind.

3. Klappe (12) gemäß einem der Ansprüche 1 oder 2, wobei das elastische Bauteil (28) eine Gesamtform eines M aufweist.

4. Klappe (12) gemäß einem der vorangehenden Ansprüche, wobei die Windung (36) des elastischen Bauteils (28) einen Durchmesser aufweist, welcher etwa gleich dem Abstand zwischen dem ersten (32A) und dem zweiten (32B) zentralen Schenkel dieses elastischen Bauteils (28) ist.

5. Klappe (12) gemäß einem der vorangehenden Ansprüche, wobei:
die Klappe (12) ein mit dem beweglichen Teil (20) zusammenhaltendes Scharnierelement (26) aufweist, und welches gegenüber dem festen Teil (14) zwischen einer ersten Position, in welcher der bewegliche Teil (20) in seiner Verschlussposition ist, und einer zweiten Position, in welcher der bewegliche Teil (20) in seiner Freigabeposition ist, unter Hindurchtreten durch eine Zwischenposition bewegbar ist,
das elastische Bauteil (28) an dem Scharnierelement (26) auf eine Art angebracht ist, welche dieses Scharnierelement (26) in seine erste Position bewegt, wenn dieses Scharnierelement (26) zwischen dieser ersten Position und seiner Zwischenposition positioniert ist, und auf eine Art, welche dieses Scharnierelement (26) in seine zweite Position bewegt, wenn dieses Scharnierelement (26) zwischen dieser zweiten Position und seiner Zwischenposition positioniert ist.

6. Klappe (12) gemäß Anspruch 5, wobei das Scharnierelement (26) eine Hohlkehle (42) zum Einklicken des zweiten Seitenschenkels (30B) des elastischen Bauteils (28) aufweist, worin dieser zweite Seitenschenkel (30B) aufgenommen ist.

7. Karosserieteil (10) eines Kraftfahrzeugs, welches eine Klappe (12) gemäß einem der Ansprüche 1 bis 6 aufweist.

8. Kraftfahrzeug, welches ein Karosserieteil (10) gemäß Anspruch 7 aufweist.

9. Kraftfahrzeug gemäß Anspruch 8, wobei die Klappe (12) eine Öffnung eines Kraftstofftanks verdeckt.

10. Kraftfahrzeug gemäß Anspruch 8 von einer elektrischen Bauart, wobei die Klappe (12) eine Steckdose verdeckt.

## Claims

1. Flap (12), in particular for a part of the bodywork (10) of a motor vehicle, of the type comprising:
- a fixed part (14) having an opening (18),
- a part (20) which is movable relative to the fixed part (14) and designed to be displaceable between a position closing the opening (18) and a position releasing the opening (18), and
- an elastic element (28) extending between the fixed part (14) and the movable part (20) so as to return the movable part (20) to its closed position or to its release position,
which elastic element (28) comprises:
- a first side arm (30A) connected to the fixed part (14) and a second side arm (30B) connected to the movable part (20) and a coil (36),
**characterised in that** the elastic element (28) further comprises:
- a first central arm (32A) extending the first side arm (30A) and forming a first fold (34A), and a second central arm (32B) extending the second side arm (30B) forming a second fold (34B),
and **in that**
- the coil (36) connects the first (32A) and second (32B) central arms to one another.

2. Flap (12) as claimed in claim 1, in which the first (30A) and second (30B) side arms of the elastic element (28) are essentially parallel.

3. Flap (12) as claimed in claim 1 or 2, in which the elastic element (28) is generally M-shaped.

4. Flap (12) as claimed in any one of the preceding claims, in which the coil (36) of the elastic element (28) has a diameter essentially equal to the space between the first (32A) and second (32B) central arms of this elastic element (28).

5. Flap (12) as claimed in any one of the preceding claims, in which:
- the flap (12) has a hinge element (26) which is connected to the movable part (20) and movable relative to the fixed part (14) between a first position in which the movable part (20) is in its closed position and a second position in which the movable part (20) is in its release position, passing via an intermediate position,
- the elastic element (28) is connected to the hinge element (26) so as to return this hinge element (26) towards its first position when this hinge element (26) is positioned between this first position and its intermediate position, and so as to return this hinge element (26) towards its second position when this hinge element (26) is positioned between this second position and its intermediate position.

6. Flap (12) as claimed in claim 5, in which the hinge element (26) incorporates a ratchet groove (42) for the second side arm (30B) of the elastic element (28) in which this second side arm (30B) is housed.

7. Bodywork element (10) of a motor vehicle, having a flap (12) as claimed in any one of claims 1 to 6.

8. Motor vehicle, having a bodywork element (10) as claimed in claim 7.

9. Motor vehicle as claimed in claim 8, in which the flap (12) conceals a petrol tank opening.

10. Motor vehicle as claimed in claim 8, of the electric type, in which the flap (12) conceals a recharging socket of the vehicle.
